# EUROPEAN PATENT APPLICATION

(11) **EP 3 241 436 A1**
(43) Date of publication of application: **08.11.2017**
(21) Application number: 17169529.9
(22) Date of filing: 04.05.2017
(51) Int. Cl.: A01M 1/02

(54) **INSECT TRAP**

(30) Priority: 06.05.2016 ES 201630595
(71) Applicant: Cugargestion Management, S.L., 30160 Monteagudo (Murcia) (ES)
(72) Inventor: CUELLO MARTINEZ, Juan, 30160 MONTEAGUDO (MURCIA) (ES); CUELLO GARCIA, José, 30160 MONTEAGUDO (MURCIA) (ES); CUELLO GARCIA, Juan Francisco, 30160 MONTEAGUDO (MURCIA) (ES)
(74) Representative: Temiño Ceniceros, Ignacio

(57) **Abstract**

Trap for insects (1) comprising a container (2) with a attracting substance and/or a insecticide; a projecture (3) comprising a cylindrical portion (5) coaxial with the container, a cover (4) with at least two notches (7); fixing means (8) for fixing the cover (4) and the container (2), wherein the diameter of the cover (4) is smaller than the diameter of the projecture (3) and larger than the diameter of the container (2), and the cover (4) and the container (2) are configured for being fixed to one another, establishing an opening (9) between the projecture (3) and the cover (4) through which the insect enters; and having a detector module (12) which is connected with a communication module (13), so a trap (1) can be integrated in a quantification system that is formed by a plurality of traps (1) and remotely managed.

## Description

### TECHNICAL FIELD

The present invention is comprised in the general field of ecology, and relates particularly to a trap for flying insects, for protection against pests affecting conventional and organic crops. Each trap can incorporate at least one detecting and quantifying sensor for detecting and quantifying the number of insects trapped in the trap, this sensor being the key element of a system formed by a plurality of traps distributed on a surface, which send data wirelessly to a gateway that allows emitting this data to an external management platform.

### PRIOR ART

There are different types of traps for flying insects, most of them having a receptacle open to the outside and an attracting substance or an insecticide inside said receptacle.

The main problem of traps of this type lies in the trap design, specifically, in the size of the opening through which insects enter the traps; this opening must have a suitable size for the insects to enter but not leave the traps.

Another problem that most traps have is that the attractant or insecticidal substance inside the receptacle is exposed to rainwater, plant protection sprays or sprinkles, such that it reduces the efficacy of the active ingredient.

In addition, most traps have glue- and insecticide-impregnated surfaces which are saturated when the entire surface is covered by insects, or deteriorate and lose efficiency when being exposed to the action of environmental agents. Furthermore, in general, the insecticide of the traps is usually a chemical substance or pesticide that is not suitable for organic agriculture, or when allowed for organic agriculture, is not recommended for use as they are harmful to the environment.

There is therefore the need to provide a trap that is effective for flying insects which may be used for protection against pests in conventional and organic crops.

There is also the need to create a system through which data about the insects trapped in an area or farm can be remotely controlled and managed, the data obtained in each of the traps forming part of said system being able to be analyzed in an individualized or general manner.

The present invention is based on a trap to which there can be furthermore added at least one detecting and quantifying sensor for detecting and quantifying insects and a radiofrequency RF module programmed for sending the data obtained in that particular trap wirelessly to a gateway which is in turn programmed for sending the information to a data management platform having means for storing and managing the information gathered in each of the different traps, as well as saving information about historic events and generating pest detection alarms.

The present invention therefore further solves the problem of wirelessly managing a plurality of data received from different traps distributed throughout a terrain or farm, being able to have accurate data of each of the traps and to manage or anticipate future problems.

It must also be pointed out that, in view of the background documents known in the prior art, traps for animals having sensors are traps intended for trapping species larger than insects, such as for example, patent document EP1350430 which defines a trap for rats, in which the trap has a sensor indicating whether or not there is a rat inside the trap; or patent document ES2355778 which discloses a trap formed by a collapsible net with an electric circuit having, among the solutions thereof, a sensor indicating when the animal is in position to be trapped.

In view of the background documents of the prior art, it can be indicated that there is no known registration which anticipates a trap for insects having sensors or similar elements which quantify and detect the number of insects trapped by said trap, or which may generate a system formed by several traps that can be remotely managed and controlled.

### DISCLOSURE OF THE INVENTION

The present invention solves the problems described in the prior art by providing a trap which acts as a support and diffuser for attracting substances/pheromones. It allows trapping insects baited by the attracting substances/pheromones, and kills the insects, as it includes an insecticidal substance.

Furthermore, the specific structure of the trap of the present invention means that the attracting substances/pheromones are protected not only from rain and mist, but also from the action of plant protection solutions which are applied with specialized machinery such as atomizers or nebulizers.

In addition, it increases the performance of the producer work equipment since the traps do not have to be removed before applying a plant protection treatment and do not have to be put back in place after said treatment. This is a very costly issue in terms of agricultural productions, since the larger the surface is, the more expensive it will be to remove the traps and to put them back in place; and in turn, the greater the need for the traps to be compatible with the atomizers since this type of machinery is the one which is most often used in large expanses, such that in most cases, a combined treatment using plant protection solutions together with traps for mass trapping would be virtually unviable.

With the trap of the present invention, different attractants can be used at the same time, which thereby allows post-treatment monitoring. After using the trap of the present invention for mass trapping, some traps can be left with freshly added pheromones for pest monitoring. Monitoring techniques are essential for knowing the evolution of the insect populations and for taking action before they become a pest. Monitoring allows a more rational and controlled use of the plant protection products, a condition necessary for modern, sustainable agriculture. The possibility which the trap offers of adding fresh attractants and/or pheromones without removing the earlier ones, allows easily distinguishing in the field which traps are still working for monitoring purposes from among traps that remained in, i.e., not removed from, the field after mass trapping treatment. Once put in place, the trap of the present invention makes it easier to know if it is still working for monitoring purposes as it has one attractant or pheromone more than the other traps, or if, in contrast, the trap has been mistaken for another one.

The possibility of placing different attractants and/or pheromones allows combining food-based attractants with sex or mating disruption pheromones for males and females in the same trap, as well as using attractants and/or pheromones intended for different insects trapped in a single trap. This thereby leads to the synergy of functionally different attractants and/or pheromones, as well as the combination of attractants and/or pheromones for different insects in the same trap.

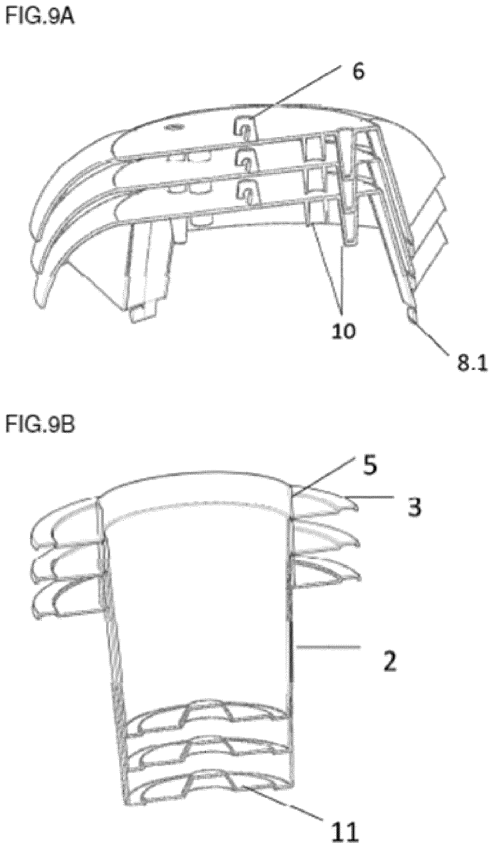

The structure of the trap of the present invention allows reduced packing (Figure 9). Reducing the volume of the traps within their packaging reduces costs associated with transport, as well as enabling storage thereof in tool sheds, usually of smaller dimensions.

The two-part and easy-to-assemble structure of the trap reduce manufacturing costs and makes *in situ* assembly easier.

In addition, it is applicable to organic agriculture. The ever increasing limitation on plant protection products allowed to be used in certified organic agriculture make constantly redesigning conventionally used products necessary. Trapping and killing off excessive insect population by physical means without using insecticides as disclosed in the present invention makes it perfectly ideal for application in organic agriculture. The insects trapped together with oil and the container drop to the farmland. The oil and the mass of dead insects act as a fertilizer following natural decomposition, completing the cycle of matter. In addition, the container breaks down when it is manufactured from a biodegradable plastic, or becomes part of the soil when it is manufactured from a compostable plastic.

Furthermore, the need to detect the amount of insects, is not as the number of insects, but as a trap fill level. Given that the trap can be filled beyond the bottom, the height of insects deposited at the bottom can be measured. For this purpose, a detector module made up of at least one detecting and quantifying sensor for detecting and quantifying insects in the inner body of the trap is placed in the trap.

After performing several analyses of the possible optimum sensors for this type of animals trapped in a trap having the aforementioned dimensions and characteristics, it is considered that the optimum detecting and quantifying sensor is to be placed as a CMOS sensor in the upper part of the inside of the trap, said CMOS sensor being formed by a CMOS camera with an orientation of at least 45° which allows viewing the bottom and the height of the device. This sensor allows integrating in a chip functions such as luminosity control, contrast correcting, analogue-digital converting or correct infrared illumination scheme detecting function. This sensor also allows offering consistent and secure data regardless of the external factors to which the trap is subjected, such as temperature, humidity or luminosity.

Another embodiment allows including capacitive or level sensors, for which at least one sensor would be placed in the inner walls of the trap at different heights in order to obtain data about the change in the inner mass found inside the trap, or to detect said mass by comparing views from the bottom and from the sides.

In any case, the trap also has a radiofrequency communication module or RF module located in the outer part of the trap, preferably on the upper part or cover of the trap, which is in contact with the detector module defined above. This communication module allows remotely sending data obtained by the detector module. To that end, the communication module will have wireless emission and reception means, such as a GPRS connection, being able to transfer a full low-resolution image for identifying the real image if the detector module has CMOS sensors.

It must be pointed out that, it is not recommended for the RF module to be positioned in the lower part of the trap since the lower part often breaks, and is preferably manufactured with biocompostable or biodegradable plastic materials. However, as stated above, the upper part is constantly reused. The upper cover is preferably manufactured from plastic with added additives in order to prolong its durability and it is therefore the ideal replacement for the RF module. In turn, attempt must preferably be made to place it under the cover, if the dimensions allow it, minimally perforating the cover to take the antenna out through the upper part.

Additionally, the present invention describes the system with which data about the insects trapped in an area or farm can be remotely controlled and managed, the data obtained in each of the traps forming part of said system being able to be analyzed in an individualized or general manner.

The system is formed by a plurality of traps distributed in an area to be determined by the user, which have a detector module and a communication module, the density and position of said traps depend on the pest to be monitored or trapped.

As seen, each trap wirelessly emits the data obtained remotely; the system therefore has a gateway, which is the device that acts as a connection interface between the different traps and a remote web platform. This device is a piece of computer equipment with a programming unit prepared for receiving data from each of the different traps and for linking said data. This gateway is designed to provide connection to each of the traps in a specific area within a range of up to 11 km. The gateway will have a power supply source and a programmable processor for configuring the system according to the requirements desired or required by the user.

The gateway is in charge of remotely sending, specifically to an external management platform, the data received by each and every one of the different traps located in the study area. This platform serves as a base for interconnecting different hardware modules, such as computers or electronic devices, or software, such that integral management of the obtained data is allowed, the information gathered in each of the different traps can be stored and the information can thus be shown in the different pieces of equipment for data query and maintenance, information about historic events can be saved and pest alarms generated.

Therefore, in a first aspect the present invention relates to a trap for flying insects (hereinafter, trap of the present invention) comprising:
- a container comprising:
   - at least one attracting substance/pheromone for attracting insects and/or an insecticidal substance,
   - a structure in the form of a projecture in turn comprising a cylindrical portion coaxial with the container,
- a cover in the form of a spherical cap comprising:
   - at least two notches located in the body of the cover from the upper end to the base thereof and separated from to one another by a distance of 2 π r/number of notches, "r" being the radius of the lower end of the cover,
- fixing means for fixing the cover and the container located at the final end of the notch of the cover and on the surface of the projecture,
characterized in that:
the diameter of the base of the cover is smaller than the diameter of the projecture and larger than the diameter of the container, wherein the cover and the container are configured for being fixed to one another, establishing an opening between the projecture and the cover through which the insect is forced to go into the trap as it takes flight from the projecture.

Additionally, the trap can have a detector module made up of at least one detecting and quantifying sensor located in the inner part of the trap, which is connected with a communication module for sending the data obtained by the detector module remotely.

In the present invention, attracting substance/pheromone refers to any chemical substance attracting flying insects that is chemically synthesized in the laboratory or occurs naturally.

In the present invention, insecticidal substance refers to any substance, either a substance that is chemically synthesized in the laboratory or obtained naturally, which kills insects through any mechanism of action. In a preferred embodiment, the insecticidal substance is a natural substance. In a preferred embodiment, the mechanism of action through which the insecticidal substance kills insects is by means of insect flight interference.

In a particular aspect, the trap of the present invention comprises at least one support for receptacles containing attracting substances/pheromones at the upper end of the cover. In a particular embodiment, the shape of the attractant/pheromone support is selected from frustoconical, conical, cross shape or star shape. In another particular embodiment, the attractant/pheromone support can be hollow, leaving an inlet port on the outer surface of the cover. In a particular embodiment of the present invention, the cover can comprise more than one attractant/pheromone support, these supports being able to be identical or different in shape and combining hollow supports, leaving or not leaving the port on the outer surface of the cover.

More particularly, the attractant/pheromone support has a frustoconical shape. In another particular aspect, the attractant/pheromone support has a star shape. In a particular aspect, the support for receptacles containing attracting substances/pheromones are blind and end in the shape of a pointed tip and are configured for perforating the sachet format of the attracting substance/pheromone. In a particular embodiment, when there is more than one support for receptacles containing attracting substances/pheromones, the attracting substances/pheromones can be identical or different.

In a particular embodiment, the trap of the present invention comprises 6 supports for attractants/pheromones..

In a particular aspect, the fixing means of the cover of the trap of the present invention comprise a fixing flange in each notch.

In a particular aspect, the fixing means of the projecture of the present invention comprise a groove.

In a particular aspect of the present invention, the cover and the projecture form an opening "a" with a height comprised between 10-25 mm.

In another particular aspect of the present invention, the height of the axial cylindrical portion is comprised between ("a"-5 mm) and "a", "a" being the height of the opening formed by the cover and the projecture.

In another particular aspect of the present invention, the cover in the form of a spherical cap has a flat upper end.

In another particular aspect, the trap of the present invention comprises support means for the trap. The support means can be found both on the cover of the trap and in the container of the trap. In a particular embodiment, the support means is a hanging support. More particularly, the support is configured for introducing a wire/cord for hanging the trap from a tree. In another particular embodiment, the support element is a hook.

In another particular aspect of the present invention, the base of the container comprises a cavity configured to allow stacking the traps.

In another particular aspect, the container of the trap of the present invention is made of a biodegradable and/or compostable material. In a particular embodiment, the container is translucent.

In the present invention, "compostable" refers to any material that breaks down due to microbiological action in a short period of time and without leaving any visible or toxic residues.

As regards the detector module, the present invention has a composite solution made up of at least one detecting and quantifying sensor for detecting and quantifying insects in the inner body of the trap; the most ideal being to place at least one CMOS sensor in the upper part of the inside of the trap, said CMOS sensor being formed by a CMOS camera with an orientation of at least 45° which allows viewing the bottom and the height of the device; there being able to be other embodiments consisting of placing at least one capacitive or level sensor in the inner walls of the trap at different heights in order to obtain data about the change in the inner mass found inside the trap, or to detect said mass by comparing views from the bottom and from the sides.

In any case, the trap also has a radiofrequency communication module or RF module located in the outer part of the trap, preferably in the upper part, and in contact with the detector module defined above. This communication module allows remotely sending the data obtained by the detector module. To that end, the communication module will have wireless emission and reception means, such as a GPRS connection, being able to transfer a full low-resolution image for identifying the real image if the detector module has CMOS sensors.

Finally, the invention has a system formed by a plurality of said traps distributed in an area to be determined by the user, which have a detector module and a communication module.

Each trap wirelessly emits the data obtained remotely; the system therefore has a gateway, which is the device that acts as a connection interface between the different traps and a remote web platform. This device is a piece of computer equipment with a programming unit prepared for receiving data from each of the different traps and for linking said data. This gateway is designed to provide connection to each of the traps in a specific area within a range of up to 15 km. The gateway will have a power supply source and a programmable processor for configuring the system according to the requirements desired or required by the user. There can be different connection means but they are always for providing a versatile solution; so it can have a GPRS or Ethernet connection.

The gateway is in charge of remotely sending, specifically to an external management platform, the data received by each and every one of the different traps located in the study area. This platform serves as a base for interconnecting different hardware modules, such as computers or electronic devices, or software, such that integral management of the obtained data is allowed, the information gathered in each of the different traps can be stored and the information can thus be shown in the different pieces of equipment for data query and maintenance, information about historic events can be saved and pest alarms generated.

### DESCRIPTION OF THE DRAWINGS

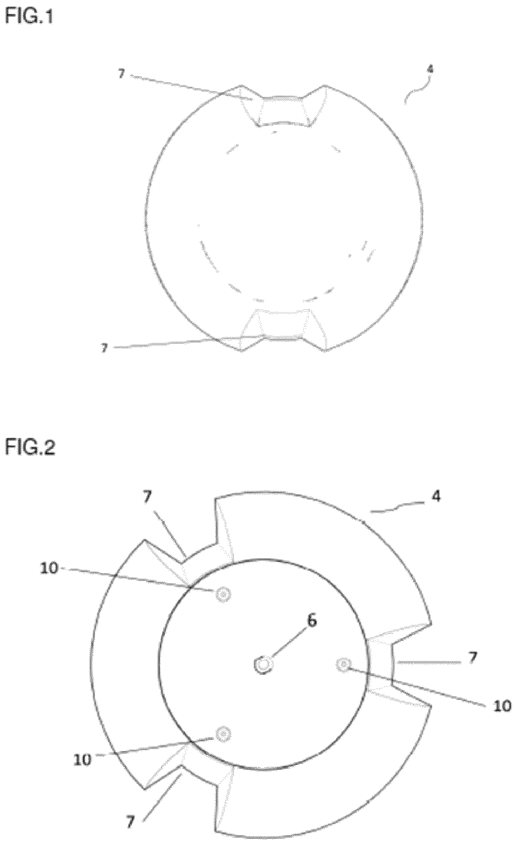

Figure 1 shows the cover (4) of the trap (1) of the present invention, in which the two notches (7) are indicated.
Figure 2 shows a particular embodiment of the present invention, in which the cover (4) comprises three notches (7) and three supports (10) with a hollow structure which allows ports to be seen from the outer surface of the cover 3, wherein the cover (4) in the form of a spherical cap has a flat upper end.
Figure 3 shows a view of the inner face of the particular embodiment of the cover described in Figure 2. Said figure shows in detail the notches (7) with the fixing means of the cover (8.1) in the form of a flange, and the inner shape of the pairs of supports (10), in which 3 frustoconical-shaped supports and three conical-shaped supports are shown.
Figure 4 shows an external view of the container (2), wherein the structure in the form of a projecture (3) and the cylindrical portion (5) coaxial with the container (2), are seen.
Figure 5 shows a particular embodiment of the container, in which the structure in the form of a projecture (3), with the fixing means (8.2) for fixing to the cover in the form of a groove, and the base of the container (2) with a cavity (11) configured for stacking several traps, are seen.
Figure 6 shows a particular embodiment of the invention, in which the way in which the cover (4) is fixed to container (2) by means of the flanges (8.1) of the notches (7) being inserted into the grooves (8.2) of the structure in the form of a projecture (3) of the container (2), is seen.
Figure 7 shows a particular embodiment of the trap (1) of the present invention, in which the cover (4) in the form of a spherical cap has a flat upper end and comprises three hollow ports (10) and a support (6) for the trap in the form of a hook.
Figure 8 shows a longitudinal section diagram of the trap of the present invention, in which the opening 9 and the height of said opening "a", formed by the cover (4) and the structure in the form of a projecture (3), and the height "h" of the axial cylindrical portion (5), are seen.
Figure 9a shows longitudinal sections of stocked covers (3), in which the supports (10) for the attracting substances/pheromones are seen in detail, wherein some of said supports have a frustoconical shape and others have a hollow conical shape, leaving a port on the outer surface of the cover (4) which makes stacking the covers (4) easier. Figure (9b) shows the stacked containers (2).
Figure 10 shows a longitudinal section of the trap (1) of the present invention as described in Figure 6.
Figure 11 shows the progress of trapping in a period of 45 days for *Prays citri.*
Figures 12 and 13 show the trap (1) of the invention with the detection module (12) and the communication module (13), the detection module (12) being positioned on the outside (Figure 12) and in the inner area (Figure 13) of the trap.
Figure 14 shows a diagram of the quantification system for quantifying insects trapped in each of the traps (1) located in the study area, there being a gateway (14) which acts as a communication interface for the data obtained in the different traps (1) and an external web platform (15).

### DETAILED DISCLOSURE OF THE INVENTION

References:
- Trap for flying insects (1),
- Container (2),
- Projecture (3),
- Axial cylindrical portion (5),
- Cover (4),
- Notch (7),
- Fixing means (8)
   - fixing means of the cover (8.1)
   - fixing means of the container (8.2)
- Opening (9),
- Attractant/pheromone support (10),
- Trap support means (6),
- Container base cavity (11).
- Detection module (12).
- Communication module (13).
- Gateway (14)
- External platform (15).
- Hardware modules (16)

In a particular embodiment, the present invention relates to a trap for flying insects (1) comprising:
- a container (2) comprising:
   - at least one attracting substance/pheromone for attracting insects and/or an insecticidal substance,
   - a structure in the form of a projecture (3) in turn comprising a cylindrical portion (5) coaxial with the container,
- a cover (4) in the form of a spherical cap comprising:
   - at least two notches (7) located in the body of the cover from the upper end to the base thereof and separated from to one another by a distance of 2 π r/number of notches, "r" being the radius of the lower end of the cover,
- fixing means (8) for fixing the cover (4) and the container (2) located at the final end of the notch of the cover (8.1) and on the surface of the projecture (8.2)
wherein:
the diameter of the base of the cover (4) is smaller than the diameter of the projecture (3) and larger than the diameter of the container (2), wherein the cover (4) and the container (2) are configured for being fixed to one another, establishing an opening (9) between the projecture (3) and the cover (4) through which the insect is forced to go into the trap as it takes flight from the projecture (3).

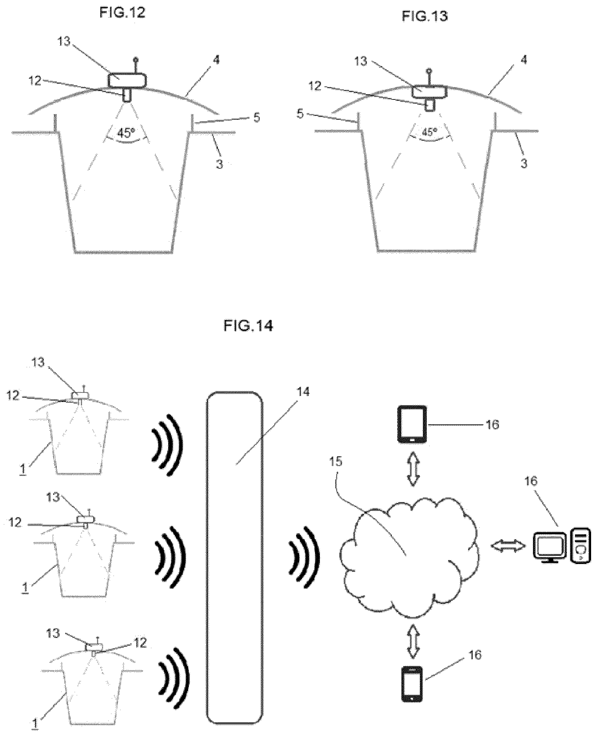

Additionally, as can be seen in Figure12 in a preferred embodiment of the invention the trap (1) has a detector module (12) made up of at least one detecting and quantifying sensor located in the inner part of the trap, which is connected by means of wiring with a communication module (13) that wirelessly sends data remotely, this communication module being located in the upper part of the trap, such that its communication antenna is free.

The trap (1) of the present invention preferably has at the upper end of the cover (4), at least one support (10) for receptacles containing attracting substances. In a preferred embodiment, the support (10) has a frustoconical shape. In another preferred embodiment, the support (10) has a conical shape. In another preferred embodiment, the support (10) has a cross shape. In another preferred embodiment, supports (10) with different shapes, preferably with conical and cross shapes, are combined. In another preferred embodiment, the conical-shaped support (10) or supports are hollow, leaving a port on the surface of the cover (4).

The fixing means (8.1) of the cover (4) preferably comprise a fixing flange in each notch (7).

The height "a" formed by the cover (4) and the projecture (3) is preferably comprised between 10-25 mm.

The height "h" of the axial cylindrical portion (5) is preferably comprised between ("a"-5 mm) and "a", "a" is the height of the opening formed by the cover (4) and the projecture (3).

The cover (4) is preferably in the form of a spherical cap with a flat upper end.

The trap for insects (1) preferably comprises support means (6) for the trap.

The insecticidal substance is preferably a natural substance.

The attractants/pheromones are preferably identical or different.

The base of the container (2) preferably comprises a cavity (11) configured to allow stacking the traps (1).

The container (2) is preferably made of a biodegradable and/or compostable material. The container (2) is preferably translucent.

The cover (4) is preferably manufactured in recyclable plastic.

As stated above, Figure 12 shows that the detector module (12) has a detecting and quantifying sensor, preferably a CMOS sensor located in the inner upper part of the trap and formed by a CMOS camera, with an orientation of at least 45° which allows viewing the bottom and the height of the device. Furthermore, this sensor allows integrating in a chip functions such as luminosity control, contrast correcting, analogue-digital converting or correct infrared illumination scheme detecting function. In this sense, this figure also shows that the communication module (13) is a radiofrequency module or RF module located in the outer part of the trap in its upper part, and it has wireless emission and reception means, such as a GPRS connection, being able to transfer a full low-resolution image for identifying the real image if the detector module has CMOS sensors. Figure 13 shows the RF module in the upper part of the trap (1) but inside the trap itself, its antenna projecting out to achieve a correct data transmission.

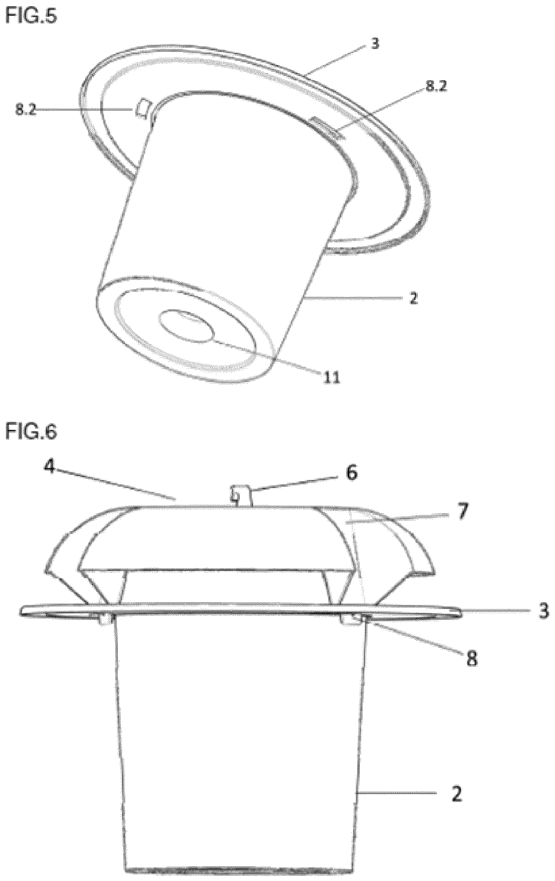

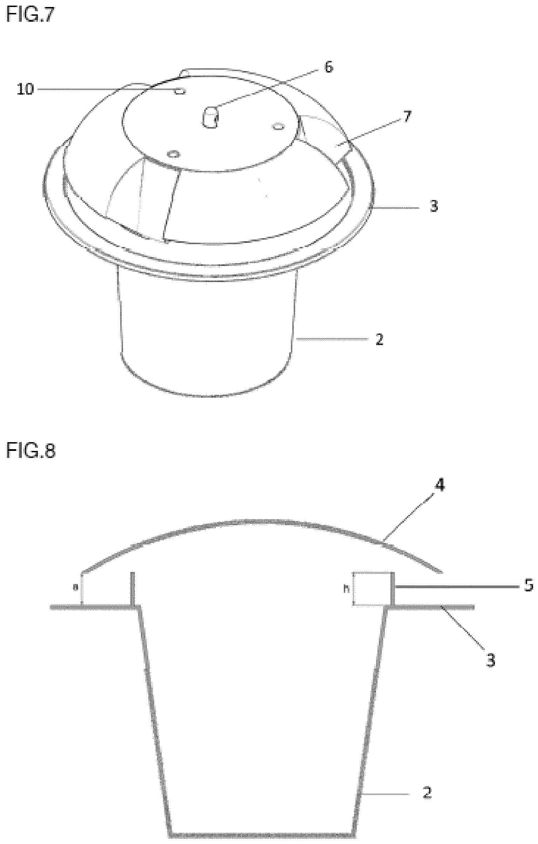

In another preferred embodiment, the trap (1) of the present invention is defined as shown in Figures 6 and 7, i.e., it comprises a container which is in turn formed by a structure in the form of a projecture (3) comprising a cylindrical portion (5) coaxial with said container (2) and a cover (4) in the form of a spherical cap with a flat upper end and comprising three notches (7) located in the body of the cover from the upper end to the base thereof and separated from to one another by a distance of 2 π r/number of notches, "r" being the radius of the lower end of the cover.

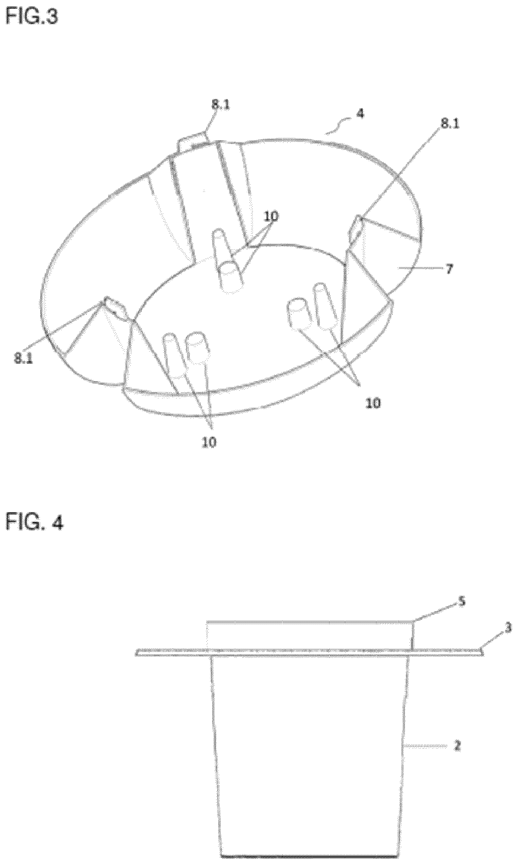

Three pairs of attractant/pheromone supports (10) are located at the upper end of the cover, arranged as shown in Figure 3, so the coupling of different attractants existing on the market is allowed. Furthermore, arranging three pairs of attractant/pheromone supports (10) allows the possibility of not having to change one attractant for another attractant once its effectiveness diminishes due to the passage of time, rather said another attractant can occupy a different support. The handling and historic control of the attractant used by the producer is therefore made easier. The attractant/pheromone supports (10) have a conical shape and end in a pointed tip so that they can readily perforate the attractant or pheromone formats existing on the market.

The cover furthermore has a support (6) for the trap, in the form of hook, which allows introducing a wire or cord through the port for hanging the trap from a tree.

The cover is coupled or fixed on the container using the fixing means (8). The fixing means (8.1) are placed on the cover at the final end of the notches (7) and comprise a fixing flange in each notch (7). In addition, the fixing means (8.2) of the container are formed by one groove per fixing flange and are located in the structure in the form of a projecture (3).

The coupling means (8) allow two trap positions, an open position where the fixing means of the cover (8.1) and of the container (8.2) are not coupled to one another, and an opposite position where the fixing means (8.1) and (8.2) are coupled to one another, closing the trap, this closed position defines the structure of the trap as shown in Figures 6 and 7.

Figure 8 shows a longitudinal section diagram of the trap. The insect, attracted by the attracting substance/pheromone, approaches the trap and tries to enter the trap through the opening (9) formed by the cover (4) and the container (2), however, it runs into the axial cylindrical portion (5) which prevents its entry, such that it is forced to alight on the structure in the form of a projecture (3). When the insect once again takes flight, it hits against the inside of the cover (4), the concave inner surface of which forces the insect to fly towards the inside of the trap.

Once inside the container (2), the insect comes into contact with the insecticidal substance, their wings being impregnated with said insecticidal substance, making flight impossible. In this preferred embodiment, the insecticidal substance is a natural oil. Living organisms are formed mainly by water, therefore, their density as a whole is greater than the density of the oil used. Therefore, the insects will gradually settle at the bottom of the container glass, freeing up the oil surface to continue trapping more insects and thereby increasing trap capacity.

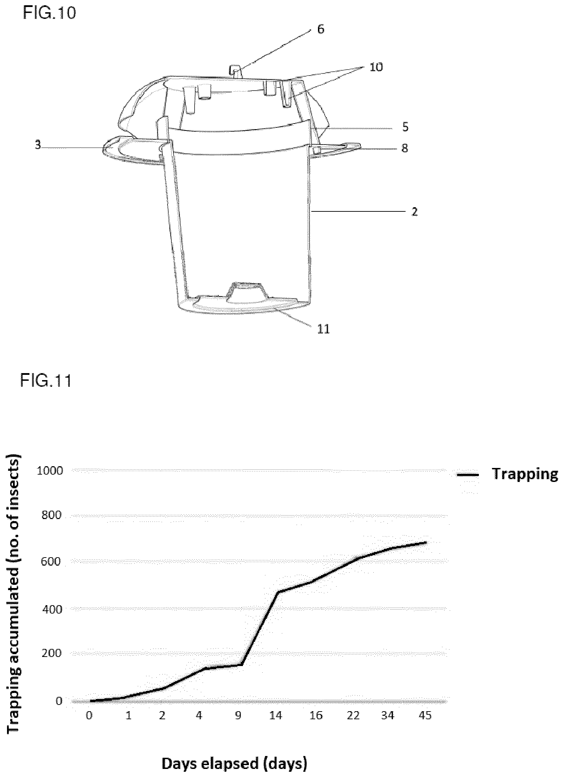

Several field tests were conducted with the traps of the present invention, as shown in Figures 6 and 7 for *Prays citri.* The results are shown in Figure 11.

The last aspect of the invention is to define the associated quantification system for quantifying trapped insects, as seen in Figure 14, said system being formed by a plurality of traps (1) with a detection module (12) and a communication module (13) located in the study area, these traps (1) being wirelessly connected with a gateway (14) which acts as a communication interface for communicating the data obtained in said traps (1) to an external web platform (15) serving as a base for interconnecting different external hardware modules (16), such as computers, tablets, mobile telephone or any other electronic device.

## Claims

1. A trap for flying insects (1) comprising:
- a container (2) comprising:
- at least one attracting substance/pheromone for attracting insects and/or one insecticidal substance,
- a structure in the form of a projecture (3) in turn comprising a cylindrical portion (5) coaxial with the container,
- a cover (4) in the form of a spherical cap comprising:
- at least two notches (7) located in the body of the cover from the upper end to the base thereof and separated from to one another by a distance of 2 π r/number of notches, "r" being the radius of the lower end of the cover,
- fixing means (8) for fixing the cover (4) and the container (2) located at the final end of the notch of the cover (8.1) and on the surface of the projecture (8.2),
**characterized in that:**
the diameter of the base of the cover (4) is smaller than the diameter of the projecture (3) and larger than the diameter of the container (2), wherein the cover (4) and the container (2) are configured for being fixed to one another, establishing an opening (9) between the projecture (3) and the cover (4) through which the insect is forced to go into the trap as it takes flight from the projecture (3).

2. The trap for insects (1) according to claim 1, whereat the upper end of the cover (4) comprises at least one support (10) for receptacles containing attracting substances.

3. The trap for insects (1) according to claim 2, wherein the support (10) for receptacles containing attracting substances is hollow, leaving an inlet port on the outer surface of the cover.

4. The trap for insects (1) according to any of the preceding claims, wherein the fixing means (8.1) of the cover (4) comprise a fixing flange in each notch (7).

5. The trap for insects (1) according to any of the preceding claims, wherein the cover (4) and the projecture (3) form an opening with a height "a" comprised between 10-25 mm.

6. The trap for insects (1) according to any of the preceding claims, wherein the height "h" of the axial cylindrical portion (5) is comprised between ("a"-5 mm) and "a", "a" being the height of the opening formed by the cover (4) and the projecture (3).

7. The trap for insects (1) according to any of the preceding claims, wherein the cover (4) in the form of a spherical cap has a flat upper end.

8. The trap for insects (1) according to any of the preceding claims, comprising support means (6) for the trap.

9. The trap for insects (1) according to any of the preceding claims, wherein the insecticidal substance is a natural substance.

10. The trap for insects (1) according to any of the preceding claims, wherein the attractants are identical or different.

11. The trap for insects (1) according to any of the preceding claims, wherein the base of the container (2) comprises a cavity (11) configured to allow stacking the traps (1).

12. The trap for insects (1) according to any of the preceding claims, comprising a detector module (12) made up of at least one detecting and quantifying sensor located in the inner part of the trap (1), which is connected by means of wiring with a communication module (13) located in the upper part of the trap (1) and having means for wirelessly sending data remotely.

13. The trap for insects (1) according to claim 12, **characterized in that** the detecting and quantifying sensor comprises a CMOS camera located in the inner upper part of the trap with an orientation of at least 45° for viewing the bottom and the height of the inside of the trap (1), and integrates a chip with luminosity control, contrast correcting, analogue-digital converting and/or infrared illumination detecting functions.

14. The trap for insects (1) according to claim 12, **characterized in that** the communication module (13) is a radiofrequency module or RF module.

15. A quantification system for quantifying insects trapped in a trap according to any of the preceding claims, comprising:
- a plurality of said traps (1) that are wirelessly connected by means of the communication module (13) to a gateway (14);
- wherein the gateway (14) is a piece of electronic equipment with a programmable unit prepared for providing connection to each of the traps (1) of the study area, and prepared for receiving and sending data from/to each of said traps (1), having a power supply source, and having wireless connection means with an external web platform (15); and
- an external web platform (15) for integrally managing the data received from the gateway (14) and serving as a base for interconnecting different external hardware modules (16).
